# EUROPÄISCHE PATENTSCHRIFT

(11) **EP 2 048 057 B1**
(45) Veröffentlichungstag und Bekanntmachung des Hinweises auf die Patenterteilung: **16.07.2014**
(21) Anmeldenummer: 08017517.7
(22) Anmeldetag: 06.10.2008
(51) Int. Cl.: B62B 5/04

(54) **Transportwagen**
Transport trolley
Chariot de transport

(30) Priorität: 08.10.2007 DE 102007048202
(43) Veröffentlichungstag der Anmeldung: 15.04.2009
(73) Patentinhaber: Wanzl Metallwarenfabrik GmbH, 89336 Leipheim (DE)
(72) Erfinder: Heinisch, Klaus, 86513 Ursberg / Bayersried (DE)

(56) Entgegenhaltungen:
- EP-B1- 1 590 224
- DE-U1- 29 717 487
- US-A1- 2004 144 601

## Beschreibung

Die Erfindung betrifft einen Transportwagen mit einer Kappe mit den Merkmalen im Oberbegriff des Hauptanspruchs.

Transportwagen dieser Gattung werden zum Transportieren von Ware, Gepäck oder anderen Gegenständen eingesetzt, und beispielsweise von der US 2004/0144601 A1 gezeigt.

Ein Transportwagen mit einer Kappe ist beispielsweise in dem europäischen Patent 1 590 224 B1 beschrieben. Eine Kappe verbindet eine Schiebeeinrichtung jeweils mit einem Holm und der im Holm gelagerten Bremsvorrichtung.

Eine solche Kappe besteht üblicherweise aus vier Teilen. Es ist ein Verbindungsteil gegeben, das eine Verbindung zwischen der Schiebeeinrichtung, dem Holm und der Bremsvorrichtung darstellt. Es ist ein Auslöseteil mit einer Nase vorgesehen, das auf die Bremsvorrichtung wirkt. Weiterhin ist eine zweiteilige Abdeckung gegeben. Diese Abdeckung soll das Einklemmen eines Fingers während der Betätigung der Schiebeeinrichtung vermeiden.

Die Montage dieser vier Teile ist jedoch zeitaufwendig und somit teuer. Weiterhin ist eine große Teilevielfalt gegeben. Auch hierdurch entstehen zusätzliche Kosten.

Daher besteht die Aufgabe der vorliegenden Erfindung darin, eine bessere Kappe aufzuzeigen.

Die Erfindung löst die Aufgabe mit den Merkmalen im kennzeichnenden Teil des Hauptanspruchs.

Durch die konstruktive Veränderung kann die Teilevielfalt reduziert werden, was sowohl die Kosten reduziert, als auch die Montage erleichtert.

Das Einklemmen eines Fingers ist durch die geänderte Konstruktion unterbunden.

Die Erfindung wird anhand von Ausführungsbeispielen näher erläutert. Es zeigen die
- Fig. 1 bis 6: jeweils ein Verbindungsteil einer Kappe in den verschiedenen Ansichten;
- Fig. 7 bis 13: jeweils ein Auslöseteil der gleichen Kappe in den verschiedenen Ansichten.

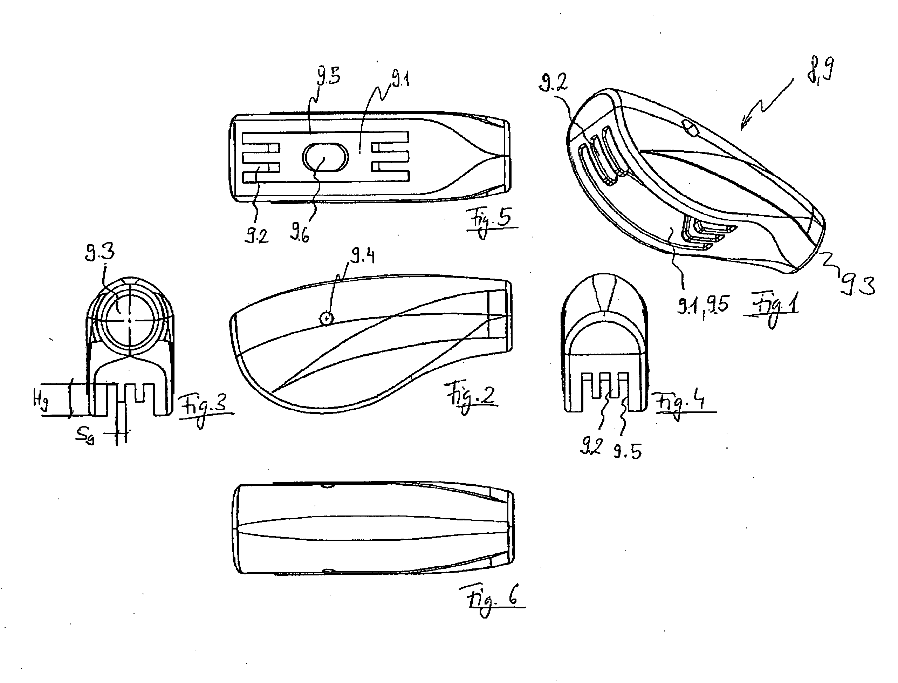

Die Figuren 1 bis 6 zeigen jeweils das Verbindungsteil 9 der Kappe 8 in den verschiedenen Ansichten.

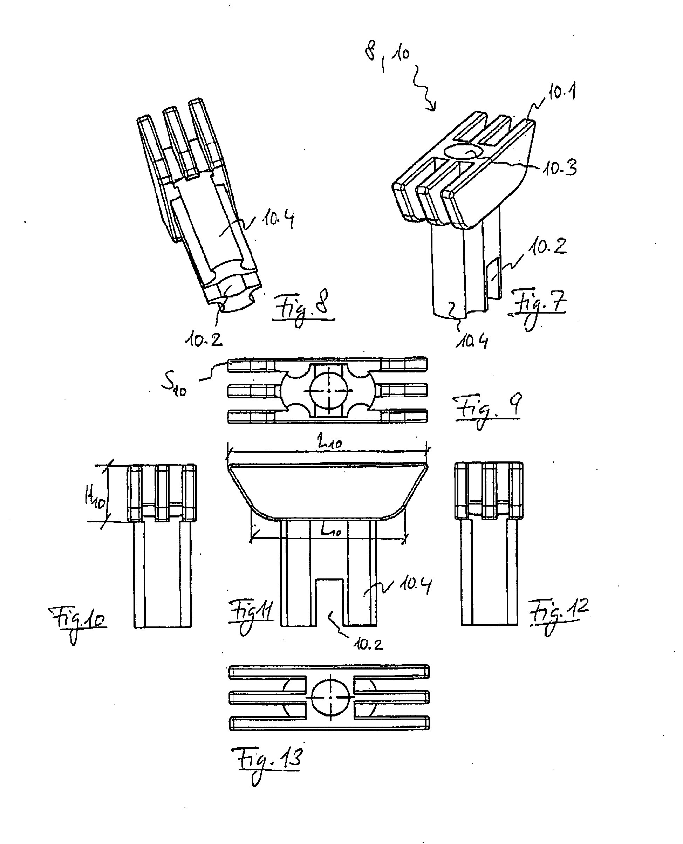

Die Figuren 7 bis 13 zeigen das Auslöseteil 10 der Kappe 8 in den verschiedenen Ansichten.

Die Kappe 8 ist bei verschiedenen Transportwagen eingesetzt. Jeder Transportwagen ist von Hand bewegbar und in gleiche oder ähnliche Wagen stapelbar. Jeder Wagen weist ein Fahrgestell auf, das mit einer Anzahl von Rollen ausgestattet ist. Jeder Wagen weist eine Ladefläche auf. An der Rückseite des Fahrgestells sind zwei nach oben gerichtete Holme angeordnet. Die Holme tragen eine Schiebeeinrichtung . Im Inneren jedes Holms ist eine Bremsvorrichtung vorgesehen, die auf die hinteren Rollen wirkt.

Die Schiebeeinrichtung beeinfilusst eine Bremsvorrichtung, indem durch Herunterdrücken der Schiebeeinrichtung die Bremswirkung der Bremsvorrichtung aufgehoben wird und der Wagen fahrbereit ist.

Die Kappe 8 verbindet die Schiebeeinrichtung jeweils mit einem der Holme und der Bremsvorrichtung. Die Kappe 8 ist zweiteilig ausgeführt und weist zwei ineinandergesetzte Teile, ein Verbindungsteil 9 (Figuren 1 bis 6) und ein Auslöseteil 10 (Figuren 7 bis 13) auf.

Jedes Auslöseteil 10, wie in den Figuren 7-13 dargestellt, ist mit mehreren Nasen 10.1 ausgestattet. Vorzugsweise sind drei Nasen 10.1 vorgesehen. Die äußeren zwei Nasen 10.1 sind durchgehend angeordnet, die mittlere Nase 10.1 hingegen ist durch eine Bohrung 10.3 unterbrochen. Dies ist in der 3-D-Darstellung in Figur 7 gezeigt.

Die Bohrung 10.3 nimmt das Ende der Bremsvorrichtung auf. Die Bremsvorrichtung ist nicht weiter dargestellt. Die Bohrung 10.3 mündet in einen Schacht 10.2. Der Schacht 10.2 ist durch die verlängerte Wandung 10.4 der Bohrung 10.3 begrenzt. Die verlängerte Wandung 10.4 wirkt direkt oder indirekt auf die Bremsvorrichtung.

Die Höhe H₁₀·der Nasen 10.1 und die Höhe H₉ des Aufnahmebereiches 9.1 sind derart ausgeführt, dass die Nasen 10.1 vollständig im Aufnahmebereich 9.1 des Verbindungsteiles 9 liegen.

Die Nasen 10.1 sind, wie in den Figuren 7 bis 13 dargestellt, parallel angeordnet. Die Anzahl der Nasen 10.1 des Auslöseteils 10 kann durch den Fachmann bestimmt werden; eine Anzahl von drei Nasen 10.1 hat sich als sinnvoll erwiesen. Die Form der Nasen 10.1 ist von ihrem Querschnitt rechteckig, wie in der Draufsicht in Fig. 13 dargestellt. Es wären aber auch andere Formen denkbar.

Figur 8 zeigt eine 3-D-Darstellung des Auslöseteiles 10 von schräg unten. Figur 11 zeigt die Seitenansicht des Auslöseteiles 10. In beiden Darstellungen sind der Schacht 10.2 sowie die verlängerte Wandung 10.4 deutlich erkennbar. Die Höhe des Schachtes 10.2 richtet sich nach der eingesetzten Bremsvorrichtung, gleiches gilt für die Form der verlängerten Wandung 10.4.

Der Abstand zwischen den einzelnen Nasen 10.1 entspricht der Stärke S₁₀ der jeweiligen Nase 10.1. Die Stärke S₁₀ jeder Nase 10.1 ist gleich. In der Draufsicht Figur 13 ist der Abstand zwischen den einzelnen Nasen 10.1 gut zu erkennen.

Es wären aber auch unterschiedliche Stärken S₁₀ und/oder ein unterschiedlicher Abstand zwischen den Nasen 10.1 denkbar.

Die Länge L₁₀ jeder Nase 10.1 ist gleich. Dies zeigen die Figuren 9 und 13. Es wären aber auch unterschiedliche Längen L₁₀ pro Nase 10.1 denkbar.

Die Figuren 10 und 12 zeigen die beiden Seitenansichten des Auslöseteiles 10 Das Auslöseteil 10 ist symmetrisch gebildet. Die Höhe der Nasen H₁₀ ist bei dieser Darstellung stets die gleiche. Es wären aber auch unterschiedliche Höhen H₁₀ der Nasen 10.1 denkbar.

Aus Figur 11 ist zu entnehmen, dass die Längen L₁₀ der Nasen 10.1 unterschiedlich sind. Die Länge L₁₀ der Nasen 10.1 nimmt Ober die Höhe H₁₀ der Nasen 10.1 ab. Dies ist bedingt durch die Form des Verbindungsteiles 9 und somit auch durch die Form des Aufnahmebereiches 9.1 des Verbindungsteiles 9.

Figur 1 zeigt das Verbindungsteil 9 der Kappe 8 in 3-D-Darstellung. Der Aufnahmebereich 9.1 zur Aufnahme des Auslöseteiles 10 ist an der Unterseite des Verbindungsteils 9 angeordnet. Es sind Führungen 9.2 vorgesehen, die die Position des Auslöseteils 10 in dem Aufnahmebereich 9.1 des Verbindungsteils 9 bestimmen.

Die Führungen 9.2 sind in ihrem Abstand zueinander bzw. zur Wandung 9.5 des Aufnahmebereiches 9.1 so ausgelegt, dass kein Finger während der Betätigung der Schiebeeinrichtung 6 eingeklemmt werden kann.

Hierbei zeigen die Figuren 1, 3, 4 und 5 jeweils zwei Führungen 9.2. Der Abstand zwischen den Führungen 9.2 richtet sich nach der Stärke S₁₀ der Nasen 10.1; hierbei ist der Abstand so gewählt, dass eine Bewegung der Nasen 10.1 zwischen den Führungen 9.2 bzw. der Wandung des Aufnahmebereiches 9.5 möglich ist. Die Länge L₉ der Führungen 9.2 ist jeweils gleich.

Wie in der Figur 3 dargestellt, weist das Verbindungsteil 9 eine Bohrung 9.3 auf, die für die Aufnahme der Schiebeeinrichtung eines Wagens vorgesehen ist. Die Bohrung 9.3 richtet sich in ihrer Form und Größe nach dem Querschnitt der Schiebeeinrichtung.

Die Figuren 1 und 2 zeigen eine weitere Bohrung 9.4, die zur Aufnahme eines nicht näher dargestellten Sicherungsmittels vorgesehen ist. Das Sicherungsmittel verbindet das Ende der Schiebeeinrichtung und die Bremsvorrichtung sowie das Verbindungsteil 9.

Vorzugsweise, gemäß den Figuren 2 und 1, weist das Verbindungsteil 9 an seiner Unter- und Oberseite eine abgerundete Form auf.

In Figur 5 ist eine Öffnung 9.6 dargestellt, die für die Aufnahme der Bremsvorrichtung vorgesehen ist. Die Öffnung 9.6 ist so positioniert, dass die Möglichkeit gegeben ist, die Bremsvorrichtung zusätzlich mittels eines Sicherungsmittels mit der Schiebeeinrichtung zu verbinden.

Die Höhe H₉ des Aufnahniebereiches 9.1 ist derart gestaltet, dass die Nasen 10.1 des Auslöseteiles 10 vollständig aufgenommen sind.

Die Größe des Aufnahmebereiches 9.1 kann hierbei auch größer ausgeführt sein, sowohl in seiner Länge als auch in seiner Höhe H9, als die ausgeführte Größe der Nasen 10.1.

Figur 6 zeigt die Draufsicht des Verbindungsteils 9.

In Figur 4 sind ebenfalls die Führungen 9.2 und die Wandung 9.5 des Aufnahmebereiches 9.1 dargestellt.

Als Material bietet sich ein witterungs- und UV-beständiger Kunststoff an.

Für die Herstellung der Kappe hat sich ein Spritzgussverfahren als vorteilhaft erwiesen.

### Bezugszeichenliste

- 1: Transportwagen, Wagen
- 2: Fahrgestell
- 3: Rollen
- 4: Ladefläche
- 5: Holm
- 6: Schiebeeinrichtung
- 7: Bremsvorrichtung
- 8: Kappe

- 9: Verbindungsteil
- 9.1: Aufnahmebereich
- H₉: Höhe des Aufnahmebereichs
- 9.2: Führung
- S₉: Stärke der Führung
- L₉: Länge der Führung
- 9.3: Bohrung (Schiebeeinrichtung)
- 9.4: Bohrung (Befestigungselement Bremsvorrichtung)
- 9.5: Wandung (Aufnahmebereich)
- 9.6: Öffnung

- 10: Auslöseteil
- 10.1: Nase
- H₁₀: Höhe der Nase
- S₁₀: Stärke der Nase
- L₁₀: Länge der Nase
- 10.2: Schacht
- 10.3: Bohrung
- 10.4: Verlängerte Wandung (Bohrung)

## Patentansprüche

1. Von Hand bewegbarer, stapelbarer Transportwagen mit einem Fahrgestell, mit Rollen, mit einer Ladefläche, mit zwei an der Rückseite des Fahrgestells befindlichen und nach oben gerichteten Holmen, die eine Schiebeeinrichtung tragen, wobei die Schiebeeinrichtung eine Bremsvorrichtung beeinflusst, die jeweils in den Holmen vorgesehen ist; eine Kappe (8) verbindet die Schiebeeinrichtung jeweils mit der Bremsvorrichtung und dem Holm, wobei die Kappe (8) aus zwei ineinander setzbaren Teilen, einem Verbindungsteil (9) und einem Auslöseteil (10) gebildet ist wobei jedes Auslöseteil (10) mit mehreren Nasen (10.1) ausgestattet ist und wobei ferner jedes Verbindungsteil (9) einen Aufnahmebereich (9.1) aufweist, der ein Einsetzen des Auslöseteils (10) ermöglicht,
**dadurch gekennzeichnet, dass** der Aufnahmebereich (9.1) zur Aufnahme des Auslöseteils (10) an der Unterseite des Verbindungsteils (9) angeordnet ist,
und dass die Höhe (H10) der Nasen (10.1) und die Höhe (H9) des Aufnahmebereichs (9.1) derart ausgerührt sind, dass die Nasen (10.1) vollständig im Aufnahmebereich (9.1) des Verbindungsteils (9) liegen.

2. Von Hand bewegbarer Transportwagen nach Anspruch 1, **dadurch gekennzeichnet, dass** jedes Auslöseteil (10) drei Nasen (10.1) aufweist.

3. Von Hand bewegbarer Transportwagen nach Anspruch 1 oder 2, **dadurch gekennzeichnet, dass** jedes Verbindungsteil (9) einen Aufnahmebereich (9.1) mit Führungen (9.2) aufweist.

4. Von Hand bewegbarer Transportwagen nach Anspruch 3, **dadurch gekennzeichnet, dass** der Abstand zwischen den Führungen (9.2) sich nach der Stärke (S10) der Nasen (10.1) richtet.

5. Von Hand bewegbarer Transportwagen nach Anspruch 1 oder 2, **dadurch gekennzeichnet, dass** das Auslöseteil (10) symmetrisch gebildet ist.

6. Von Hand bewegbarer Transportwagen nach einem der Ansprüche 1, 2 oder 5, **dadurch gekennzeichnet, dass** die Nasen (10.1) parallel angeordnet sind.

7. Von Hand bewegbarer Transportwagen nach einem der Ansprüche 1, 2, 5, oder 6, **dadurch gekennzeichnet, dass** die Form der Nasen (10.1) in ihrem Querschnitt rechteckig ist.

8. Von Hand bewegbarer Transportwagen nach einem der Ansprüche 1, 2, oder 5 bis 7, **dadurch gekennzeichnet, dass** die Stärke (S10) jeder Nase (10.1) gleich ist.

9. Von Hand beweabarer Transportwagen nach einem der Ansprüche 1, 2, oder 5 bis 8, dadurch gekenntzeichnet, dass die Länge (L10) ieder Nase (10.1) gleich ist.

10. Von Hand bewegbarer Transportwagen nach einem der Ansprüche 1, 2 oder 5 bis 9, **dadurch gekennzeichnet, dass** die Höhe (H10) der Nasen (10.1) die gleiche ist.

11. Von Hand bewegbarer Transportwagen nach einem der Ansprüche 1, 2 oder 5 bis 10, **dadurch gekennzeichnet, dass** die Länge (L10) der Nasen (10.1) über die Höhe (H10) der Nasen (10.1) abnimmt.

12. Von Hand bewegbarer Transportwagen nach einem der Ansprüche 1, 2 oder 5 bis 11, dadurch gekenntzeichnet, dass die äußeren zwei Nasen (10.1) durchgehend angieordnet sind, und die mittlere Nase (10.1) hingegen durch eine Bohrung (10.3) unterbrochen ist.

## Claims

1. A manually movable, nestable trolley having a wheel frame, having castors, having a loading surface, having two upwardly-directed members located at the rear of the wheel frame and bearing a pushing arrangement, wherein the pushing arrangement influences a brake device provided in the members in each case; a cap (8) connects the pushing arrangement to the brake device and the member in each case, wherein the cap (8) is formed from two parts, a connecting part (9) and a release part (10), placeable into one another, wherein each release part (10) is equipped with a plurality of projections (10.1) and wherein furthermore each connecting part (9) has a receiving region (9.1) enabling insertion of the release part (10),
**characterised in that** the receiving region (9.1) for receiving the release part (10) is arranged at the underside of the connecting part (9),
and **in that** the height (H10) of the projections (10.1) and the height (H9) of the receiving region (9.1) are designed such that the projections (10.1) lie completely in the receiving region (9.1) of the connecting part (9).

2. A manually movable trolley according to claim 1, **characterised in that** each release part (10) has three projections (10.1).

3. A manually movable trolley according to claim 1 or 2, **characterised in that** each connecting part (9) has a receiving region (9.1) with guides (9.2).

4. A manually movable trolley according to claim 3, **characterised in that** the distance between the guides (9.2) is determined by the thickness (S10) of the projections (10.1).

5. A manually movable trolley according to claim 1 or 2, **characterised in that** the release part (10) is formed symmetrically.

6. A manually movable trolley according to any one of claims 1, 2 or 5, **characterised in that** the projections (10.1) are arranged in a parallel manner.

7. A manually movable trolley according to any one of claims 1, 2, 5 or 6, **characterised in that** the form of the projections (10.1) is rectangular in cross-section.

8. A manually movable trolley according to any one of claims 1, 2 or 5 to 7, **characterised in that** the thickness (S10) of each projection (10.1) is identical.

9. A manually movable trolley according to any one of claims 1, 2 or 5 to 8, **characterised in that** the length (L10) of each projection (10.1) is identical.

10. A manually movable trolley according to any one of claims 1, 2 or 5 to 9, **characterised in that** the height (H10) of the projections (10.1) is the same.

11. A manually movable trolley according to any one of claims 1, 2 or 5 to 10, **characterised in that** the length (L10) of the projections (10.1) decreases over the height (H10) of the projections (10.1).

12. A manually movable trolley according to any one of claims 1, 2 or 5 to 11, **characterised In that** the outer two projections (10.1) are arranged in a continuous manner, and the middle projection (10.1) on the other hand is interrupted by a bore (10.3).

## Revendications

1. Chariot de transport pouvant être déplacé à la main, emboîtable, avec un châssis, avec des roulettes, avec une surface de chargement et avec deux montants qui se trouvent sur le côté arrière du châssis, sont dirigés vers le haut et portent un dispositif de poussée, sachant que le dispositif de poussée agit sur un dispositif de freinage qui est respectivement prévu dans les montants, sachant qu'une coiffe (8) relie respectivement le dispositif de poussée au dispositif de freinage et au montant, sachant que la coiffe (8) est composée de deux parties pouvant être insérées l'une dans l'autre, une partie de liaison (9) et une partie de déclenchement (10), sachant que chaque partie de déclenchement (10) est équipée de plusieurs ergots (10.1) et sachant en outre que chaque partie de liaison (9) présente une région réceptrice (9.1) qui permet l'insertion de la partie de déclenchement (10),
**caractérisé en ce que** la région réceptrice (9.1) destinée à recevoir la partie de déclenchement (10) est disposée sur le côté inférieur de la partie de liaison (9),
et **en ce que** la hauteur (H10) des ergots (10.1) et la hauteur (H9) de la région réceptrice (9.1) sont conçues de telle sorte que les ergots (10.1) sont reçus en totalité dans la région réceptrice (9.1) de la partie de liaison (9).

2. Chariot de transport pouvant être déplacé à la main selon la revendication 1, **caractérisé en ce que** chaque partie de déclenchement (10) présente trois ergots (10.1).

3. Chariot de transport pouvant être déplacé à la main selon la revendication 1 ou 2, **caractérisé en ce que** chaque partie de liaison (9) présente une région réceptrice (9.1) pourvue de guides (9.2).

4. Chariot de transport pouvant être déplacé à la main selon la revendication 3, **caractérisé en ce que** la distance entre les guides (9.2) est fonction de l'épaisseur (S10) des ergots (10.1).

5. Chariot de transport pouvant être déplacé à la main selon la revendication 1 ou 2, **caractérisé en ce que** la partie de déclenchement (10) est réalisée de forme symétrique.

6. Chariot de transport pouvant être déplacé à la main selon l'une des revendications 1, 2 ou 5, **caractérisé en ce que** les ergots (10.1) sont disposés en parallèle.

7. Chariot de transport pouvant être déplacé à la main selon l'une des revendications 1, 2, 5 ou 6, **caractérisé en ce que** la forme de section des ergots (10.1) est rectangulaire.

8. Chariot de transport pouvant être déplacé à la main selon l'une des revendications 1, 2 ou 5 à 7, **caractérisé en ce que** l'épaisseur (S10) de chaque ergot (10.1) est identique.

9. Chariot de transport pouvant être déplacé à la main selon l'une des revendications 1, 2 ou 5 à 8, **caractérisé en ce que** la longueur (L10) de chaque ergot (10.1) est identique.

10. Chariot de transport pouvant être déplacé à la main selon l'une des revendications 1, 2 ou 5 à 9, **caractérisé en ce que** la hauteur (H10) des ergots (10.1) est la même.

11. Chariot de transport pouvant être déplacé à la main selon l'une des revendications 1, 2 ou 5 à 10, **caractérisé en ce que** la longueur (L10) des ergots (10.1) diminue sur la hauteur (H10) des ergots (10.1).

12. Chariot de transport pouvant être déplacé à la main selon l'une des revendications 1, 2 ou 5 à 11, **caractérisé en ce que** les deux ergots extérieurs (10.1) sont disposés continûment, tandis que l'ergot intermédiaire (10.1) est interrompu par un perçage (10.3).
